# EUROPÄISCHE PATENTANMELDUNG

(11) **EP 1 174 248 A2**
(43) Veröffentlichungstag der Anmeldung: **23.01.2002**
(21) Anmeldenummer: 01110967.5
(22) Anmeldetag: 07.05.2001
(51) Int. Cl.: B29C 65/18

(54) **Heizelementschweissvorrichtung**

(30) Priorität: 20.07.2000 DE 10035695
(71) Anmelder: Georg Fischer Rohrleitungssysteme AG, 8201 Schaffhausen (CH)
(72) Erfinder: Wermelinger, Jörg, 8200 Schaffhausen (CH); Hoffmann, Sven, 8200 Schaffhausen (CH)
(74) Vertreter: Weiss, Wolfgang, Dr.

(57) **Zusammenfassung**

Es wird eine Heizelementschweissvorrichtung zum bereichsweisen Aufwärmen von Kunststoffformteilen während des Schweissvorganges vorgeschlagen, umfassend mindestens zwei aussen auf die Kunststoffformteile im Bereich der Schweissnaht anliegende schalenförmige Heizelemente (2,3), wobei die Heizelemente rotationssymmetrisch ausgebildet sind, wobei jedes Heizelement (2,3) einen Zentralbereich (7) und zwei in axialer Richtung an beiden Seiten des Zentralbereichs angrenzend angeordneten und axial symmetrisch ausgebildeten Randbereiche (8,9) aufweist, und wobei der Randbereich aus einem Werkstoff ausgebildet ist, der eine kleinere Wärmeleitfähigkeit als der Werkstoff des Zentralbereichs aufweist.

## Beschreibung

Die Erfindung bezieht sich auf eine Heizelementschweissvorrichtung zum bereichsweisen Aufwärmen von Kunststoffformteilen während des Schweissvorganges, umfassend mindestens zwei aussen auf die Kunststoffformteile im Bereich der Schweissnaht anliegende schalenförmige Heizelemente, wobei die Heizelemente rotationssymmetrisch ausgebildet sind. Die Erfindung bezieht sich auch auf ein Verfahren zum bereichsweisen Aufwärmen von Kunststoffformteilen.

Im Rohrleitungsbau werden zunehmend Kunststoffrohrformteile, wie beispielsweise Rohrbögen und Rohrverzweigungen, eingesetzt, die auf der Baustelle miteinander verschweisst werden. Die Kunststoffrohrformteile werden rechtwinklig und plan bearbeitet und in einer speziellen Schweissvorrichtung axial zueinander ausgerichtet und eingespannt. Die Rohrenden werden aufgeheizt und axial zusammengepresst. Während des Schweissvorganges werden die Kunststoffrohrformteile von Spannsystemen an die Schweissvorrichtung festgehalten.

Aus der DE 36 36 891 A1 ist ein Verfahren und eine Vorrichtung zum Stumpfschweissen von Kunststoffrohrformteilen bekannt. Die Vorrichtung umfasst zwei elektrisch beheizte Heizelemente, die schalenförmig aussen auf die Schweissstelle angebracht werden. Das untere Heizelement ist zum oberen Heizelement unterschiedlich ausgebildet und weist eine konvex gewölbte Fläche auf. Die Einspannvorrichtungen sind als separate Elemente der Schweissvorrichtungen dargestellt. Für ein genaues Arbeiten während des Schweissens müssen sämtliche Elemente in axialer Richtung präzise ausgerichtet werden, was mit zunehmender Anzahl Elemente und mit zunehmender Entfernung zwischen den Elementen schwieriger wird.

Ausgehend von diesem Stand der Technik ist es Aufgabe der Erfindung, eine Heizelementschweissvorrichtung zum bereichsweisen Aufwärmen von Kunststoffformteilen anzugeben, die einfach aus möglichst wenig unterschiedliche Einzelteile herzustellen ist und die auch kleinste Kunststoffformteile während des Schweissens auf engstem Raum präzise zueinander ausgerichtet hält.

Diese Aufgabe wird gelöst durch eine Heizelementschweissvorrichtung zum bereichsweisen Aufwärmen von Kunststoffformteilen während des Schweissvorganges, umfassend mindestens zwei aussen auf die Kunststoffformteile im Bereich der Schweissnaht anliegende schalenförmige Heizelemente, wobei die Heizelemente rotationssymmetrisch ausgebildet sind, wobei jedes Heizelement einen Zentralbereich und zwei in axialer Richtung an beiden Seiten des Zentralbereichs angrenzend angeordneten und axial symmetrisch ausgebildeten Randbereiche aufweist, und wobei der Randbereich aus einem Werkstoff ausgebildet ist, der eine kleinere Wärmeleitfähigkeit als der Werkstoff des Zentralbereichs aufweist.

Bevorzugte Weiterbildungen der Erfindung ergeben sich aus den abhängigen Ansprüchen.

Es ist von Vorteil, dass die Heizelementschweissvorrichtung einfach und ohne die Ausbildung von radial ausgebildeten konvexen Wölbungen hergestellt werden kann. Dies wird dadurch erreicht, dass der Randbereich ringförmig ausgebildet ist, mit einer kreisförmigen Innenfläche auf die Kunststoffformteile anliegend angeordnet ist und einen Verbindungsbereich zur Verbindung mit dem Zentralbereich, einen Übergangsbereich und einen Befestigungsbereich zur Befestigung an einem weiteren Strukturelement der Schweissvorrichtung umfasst. Dies wird auch dadurch erreicht, dass die Randbereiche durch Klemmung, Verschweissung oder Verklebung mit dem Zentralbereich verbindbar angeordnet sind.

Es ist auch von Vorteil, dass mit der Heizelementschweissvorrichtung die zum Schweissen notwendige Wärme möglichst gezielt und ohne Energieverluste der Schweissstelle zugeführt werden kann. Dies wird dadurch erreicht, dass der Übergangsbereich eine Wandstärke D aufweist, die kleiner als 10% der Länge L des Übergangsbereiches ist. Dies wird auch dadurch erreicht, dass die Wandstärke D des Übergangsbereiches weniger als 1 mm beträgt. Dies wird weiter auch dadurch erreicht, dass der Werkstoff des Zentralbereiches eine mindestens 25 mal so hohe Wärmeleitfähigkeit aufweist als der Werkstoff des Randbereiches. Hierzu ist es vorteilhaft, wenn der Randbereich aus Keramik oder aus hoch legiertem Stahl ausgebildet ist.

Durch die wesentlich schlechtere Wärmeleitfähigkeit derjenigen Bereichen, die nicht unmittelbar für den Schweissvorgang notwendig sind und durch die wesentlich dünnere Wandstärke des Übergangsbereiches wird die Wärmemenge, die durch die Wärmeleitung verloren geht, wesentlich eingeschränkt. Durch ein besonderes Aufheizverfahren, wobei die obenliegende Heizung und die untenliegende Heizung von einem Rechnersystem unterschiedlich angesteuert wird, wird erreicht, dass die Schweissstelle rundum die gleiche Schweisstemperatur aufweist.

Ein Ausführungsbeispiel der Erfindung wird anhand der Figuren beschrieben. Es zeigen:
Figur 1 eine Sicht auf eine erfindungsgemässe Heizelementschweissvorrichtung und
Figur 2 einen Schnitt durch die Heizelementschweissvorrichtung von Figur 1.

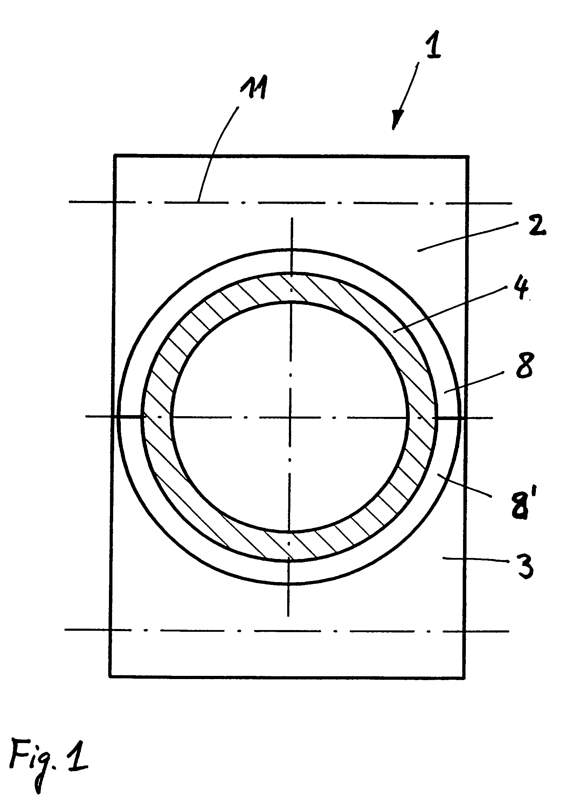

In Figur 1 ist schematisch eine Sicht auf eine Heizelementschweissvorrichtung 1 für das bereichsweise Aufwärmen von Kunststoffrohrformteilen dargestellt. Die Heizelementschweissvorrichtung 1 ist ein Teil einer grösseren Einrichtung, auf die die Kunststoffrohrformteile, wie beispielsweise Rohrenden, Rohrbögen und Rohrverzweigungen miteinander durch Schweissen verbunden werden können. In Figur 1 ist die Sicht auf die Heizelementschweissvorrichtung 1 in der Richtung der Rohrleitungsachse dargestellt. Die Heizelementschweissvorrichtung 1 besteht im Wesentlichen aus einem oberen Heizelement 2 und einem unteren Heizelement 3, die zusammen zwei Rohrstücke 4,5, von denen in Figur 1 nur den Schnitt ersichtlich ist, halbkreisförmig und schalenartig umschliessen. Das obere Heizelement 2 und das unteren Heizelement 3 sind gewöhnlich in einer aufklappbaren zweiteiligen Heizstation angeordnet. Die zwei Teile der Heizstation sind dann mittels einem Scharnier, das hier nicht dargestellt ist, mit einander verbunden.

Die Heizstation kann in der Schweissvorrichtung in der axialen Richtung verschiebbar auf Schienen angeordnet sein und kann somit auf die Schweissstelle der Rohrformteile, die miteinander verschweisst werden müssen, ausgerichtet werden. In kleineren, tragbaren Schweissvorrichtungen kann die Heizstation feststehend angeordnet sein. Die Rohrenden müssen dann von beiden Seiten in die Heizstation eingeführt werden. Die Rohrenden werden von beiden Seiten in axialer Richtung soweit in die Heizstation eingeführt, dass die Schweissstelle genau in die Mitte der Heizelementen 2,3 zu liegen kommt. Vor dem Einführen in die Schweissvorrichtung müssen die Rohrenden rechtwinklig abgeschnitten und plan bearbeitet sein. Anschliessend an diese Rohrbearbeitung oder Rohrvorbereitung werden die Rohrenden oder die Kunststoffrohrformteile vor dem eigentlichen Schweissvorgang in der Schweissvorrichtung genau aufeinander ausgerichtet und eingespannt.

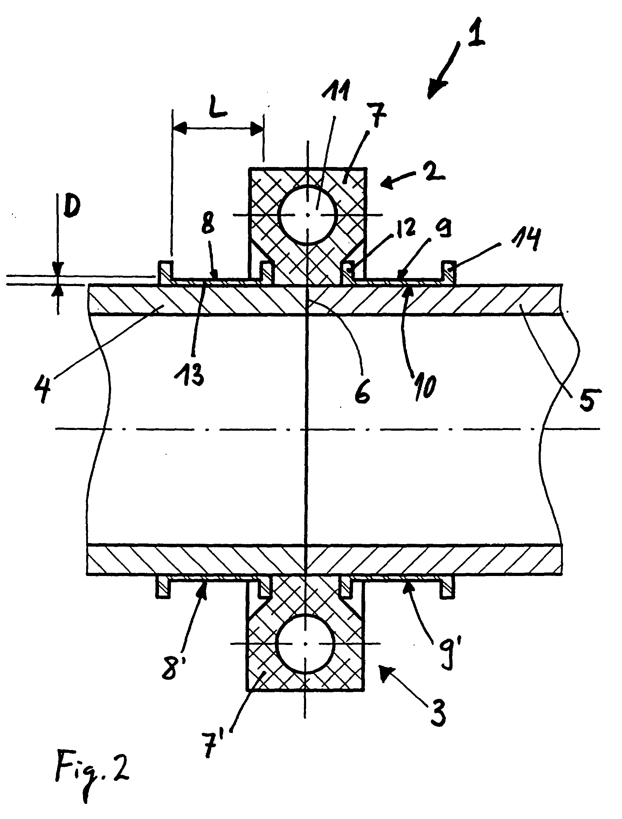

In Figur 2 ist einen Schnitt durch die Heizelementschweissvorrichtung 1 von Figur 1 dargestellt. In Figur 2 sind, zugunsten der besseren Übersicht, lediglich die Heizelemente 2,3 ohne weitere Teile, wie beispielsweise die Schienen und die Spannelemente und weitere Befestigungselemente oder Strukturelemente der Schweissvorrichtung dargestellt. In Figur 2 sind auch zwei Rohrstücke 4,5 mit einer Schweissstelle 6 dargestellt. Das obere Heizelement 2 und das untere Heizelement 3 sind identisch ausgebildete und gegeneinander austauschbare Bauteile, die in der Heizstation befestigt sind. Jedes Heizelement 2,3 besteht aus einem Zentralbereich 7, 7' und zwei Randbereichen 8, 8', 9, 9'. Sowohl die Zentralbereiche 7,7' als auch die Randbereiche 8, 8', 9, 9' sind ringförmig ausgebildet und weisen eine Innenfläche 10 auf, die die Rohrstücke 4,5 kreisförmig umschliesst. Die Innenflächen der Randbereiche 8, 8', 9, 9' weisen den selben Innenradius auf wie die Innenflächen der Zentralbereiche 7, 7'. Die Kombination der Heizelemente 2, 3 weist somit eine relativ lange und gleichbleibende rohrförmige Innenfläche 10 auf, die einfach herzustellen ist und die das Ausrichten der beiden Rohrstücke 4, 5 erleichtert. Die Randbereiche 8,9 weisen ein wesentlich kleineres Gewicht auf als der Zentralbereich 7. Im Zentralbereich 7 ist eine Bohrung 11 ausgebildet, die zur Aufnahme einer elektrischen Heizpatrone, beispielsweise einer Widerstandsheizung, vorgesehen ist. Die Bohrungen 11 und auch die Heizpatronen im oberen und im unteren Heizelement 2,3 sind identisch ausgebildet. Damit die Heizung im oberen und im unteren Heizelement 2, 3 unterschiedlich gesteuert und geregelt werden kann, sind die Heizungen unabhängig voneinander mit einer Heizungsregelung, beispielsweise einem Rechner, verbunden. Im oberen und im unteren Heizelement 2,3 sind auch Temperaturmesssonden angeordnet um die Temperatur des oberen und des unteren Heizelementes gesondert zu erfassen.

Die Randbereiche 8,9 sind ringförmig und flanschartig ausgebildet und umfassen nacheinander, von dem Zentralbereich 7 aus gesehen, einen Verbindungsbereich 12, einen Übergangsbereich 13 und einen Befestigungsbereich 14. Der Verbindungsbereich 12 weist einen Flansch zur Verbindung mit dem Zentralbereich 7 auf. Die Verbindung des Randbereiches 8,9 mit dem Zentralbereich 7 des Heizelementes 2,3 kann durch Klemmen, Verschweissen, Verlöten oder Verkleben hergestellt werden. Bei der gewählten Verbindungsmethode ist es wichtig, dass über die Verbindungsfläche zwischen Zentralbereich 7 und dem Verbindungsbereich 12 des Randbereiches 8,9 möglichst wenig Wärme abfliessen kann. Der Übergangsbereich 13 hat eine verhältnismässig grosse Länge L und weist eine verhältnismässig geringe Wandstärke D auf. Die Wandstärke D des Übergangsbereiches 13 ist vorzugsweise kleiner als 10% der Länge L. Um den Wärmestrom durch den Übergangsbereich 13 möglichst weit einzuschränken, wird die Wandstärke kleiner als 1 mm gewählt. Mit dieser Anordnung wird bei einer ausreichenden Festigkeit des Heizelementes ein möglichst geringer Wärmeverlust von dem Zentralbereich zum Randbereich auftreten.

Der Wärmeverlust wird weiter eingeschränkt, wenn die Werkstoffe des Randbereiches 8,9 und des Zentralbereiches 7 so gewählt werden, dass die Wärmeleitfähigkeit des Randbereiches 8,9 mindestens fünfundzwanzig mal so klein ist als die Wärmeleitfähigkeit des Zentralbereiches 7. Der Zentralbereich 7 kann aus einem relativ gut Wärme leitenden Metall, wie beispielsweise Kupfer oder Silber hergestellt werden, und die Randbereiche 8,9 können aus einem relativ schlecht Wärme leitenden Werkstoff, wie beispielsweise hoch legiertem Stahl oder Keramik hergestellt werden.

Am flanschartigen Befestigungsbereich 14 können weitere nicht dargestellte Strukturelemente der Schweissvorrichtung befestigt werden. Beispielsweise kann hier eine Spannvorrichtung oder eine Befestigung am Gehäuse der Schweissvorrichtung befestigt werden. Hiermit wird erreicht, dass möglichst wenig Wärme in die übrige Struktur der Schweissvorrichtung abfliesst. Auch wird hiermit eine kompakte Anordnung von Heizelement und Spannelementen erreicht. Die möglichst kompakte Anordnung ist von Vorteil für die Anwendung der Schweissvorrichtung bei engen Platzverhältnissen und wenn kleinere Rohrlängen zusammengeschweisst werden müssen.

Vor allem bei grösseren Rohrleitungsdurchmessern werden oft ungleichmässige Temperaturverhältnisse beobachtet. Durch die Konvektion wird Wärme vom unteren Heizelement 3 in dem Wirkungsbereich des oberen Heizelementes 2 gebracht. Dies führt zu einer zu höheren Temperatur an der Schweissstelle 6 im Bereich des oberen Heizelementes 2. An der einmal verschweissten Rohrleitung kann dieser Temperaturunterschied erkannt werden an einer bereichsweisen unterschiedlichen Ausbildung der Schweissstelle 6. Der Bereich, der auf beiden Seiten der Schweissstelle 6 geschmolzen wurde, kann eine unterschiedliche Breite aufweisen. Die Schmelzzonen, die beim Aufheizen entstehen, können eine unterschiedliche Breite aufweisen. Hierdurch kann im Material der Rohrleitung eine Schwachstelle geschaffen werden. Die Festigkeit des Kunststoffformteiles im Bereich der Schweissstelle kann ungünstig beeinflusst werden. Mit einem besonderen Verfahren während des Aufheizens kann verhindert werden, dass die Schweisstemperatur im Bereich des oberen Heizelementes 3 zu hoch wird.

Beim Schweissverfahren unterscheidet man in einer Aufheizphase, einer Schweissphase und einer Abkühlphase. Während des Aufheizens werden die Heizelemente 2,3 auf die Schweisstemperatur gebracht. Das obere und das untere Heizelement 2,3 sind für die gleiche elektrische Leistung ausgelegt. Während des Aufheizens wird die Temperatur an Temperaturmesssonden im oberen und im unteren Heizelement 2,3 in festen Zeitintervallen, beispielsweise einmal pro 0,5 Sekunde, gemessen und in einem Rechner gespeichert. Im Rechner wird eine Temperatur-Zeit-Kurve für jedes Heizelement 2,3 erfasst. Die Temperatur-Zeit-Kurve des oberen Heizelementes 2 wird eine grössere Steilheit als die des unteren Heizelementes 3 aufweisen. Der Rechner kann die unterschiedliche Steilheit der Temperatur-Zeit-Kurven berechnen. Der Rechner kann aufgrund dieser unterschiedlichen Steilheit die Energiezufuhr zum oberen Heizelement 2 regeln, beispielsweise durch eine Drosselung der elektrischen Leistung oder durch eine kürzere Einschaltdauer des oberen Heizelementes 2. Hiermit wird erreicht, dass die Steilheit der zwei Temperatur-Zeit-Kurven bereits in der Aufheizphase angeglichen wird. Auch wenn die Lage des unteren und des oberen Heizelementes 2,3 vertauscht wird, beispielsweise wenn die Schweissvorrichtung seitenverkehrt verwendet wird, kann der Rechner aufgrund der grösseren Steilheit erkennen, welches Heizelement oben angeordnet ist. Hiermit wird erreicht, dass am Ende des Aufheizens die Schweisstemperatur im Bereich des oberen und des unteren Heizelementes 2,3 zum gleichen Zeitpunkt erreicht wird. Die oben beschriebenen Unterschiede, hervorgerufen durch die unterschiedliche Wärmeaufnahme im Bereich des oberen und des unteren Heizelementes 2,3 können praktisch vemachlässigbar klein werden, wenn die Intervallzeit für die Messung und Regelung ausreichend kurz gewählt wird.
Die Heizelementschweissvorrichtung 1 und das Verfahren zum bereichsweisen Aufwärmen wird im Rohrleitungsbau vor allem zum Schweissen von unterschiedlich geformten Rohrteilen aus Kunststoff eingesetzt. Die Schweissverfahren, in die das Verfahren angewendet wird, werden allgemein als Stumpfschweissverfahren und insbesondere als Wulst- und Nutfreie Schweissverfahren (= WNF-Schweissen) bezeichnet.

## Patentansprüche

1. Heizelementschweissvorrichtung zum bereichsweisen Aufwärmen von Kunststoffformteilen während des Schweissvorganges, umfassend mindestens zwei aussen auf die Kunststoffformteile im Bereich der Schweissnaht anliegende schalenförmige Heizelemente (2,3), wobei die Heizelemente rotationssymmetrisch ausgebildet sind, **dadurch gekennzeichnet, dass** jedes Heizelement (2,3) einen Zentralbereich (7,7') und zwei in axialer Richtung an beiden Seiten des Zentralbereichs angrenzend angeordneten und axial symmetrisch ausgebildeten Randbereiche (8,8',9,9') aufweist, wobei der Randbereich aus einem Werkstoff ausgebildet ist, der eine kleinere Wärmeleitfähigkeit als der Werkstoff des Zentralbereichs aufweist.

2. Heizelementschweissvorrichtung zum bereichsweisen Aufwärmen von Kunststoffformteilen nach dem Anspruch 1, **dadurch gekennzeichnet, dass** der Randbereich (8,9) ringförmig ausgebildet ist, mit einer kreisförmigen Innenfläche (10) auf die Kunststoffformteile anliegend angeordnet ist und einen Verbindungsbereich (12) zur Verbindung mit dem Zentralbereich (7), einen Übergangsbereich (13) und einen Befestigungsbereich (14) zur Befestigung an einem weiteren Strukturelement der Schweissvorrichtung umfasst.

3. Heizelementschweissvorrichtung zum bereichsweisen Aufwärmen von Kunststoffformteilen nach dem Anspruch 1 oder 2, **dadurch gekennzeichnet, dass** der Übergangsbereich (13) eine Wandstärke D aufweist, die kleiner als 10% der Länge L des Übergangsbereiches (13) ist.

4. Heizelementschweissvorrichtung zum bereichsweisen Aufwärmen von Kunststoffformteilen nach einem der Ansprüche 1 bis 3, **dadurch gekennzeichnet, dass** die Wandstärke D des Übergangsbereiches (13) weniger als 1 mm beträgt.

5. Heizelementschweissvorrichtung zum bereichsweisen Aufwärmen von Kunststoffformteilen nach einem der Ansprüche 1 bis 4, **dadurch gekennzeichnet, dass** in die im Bereich der Schweissnaht unterhalb und oberhalb des Kunststoffformteiles aussen anliegenden schalenförmigen Zentralbereiche (7,7') unabhängig von einander ansteuerbare elektrische Heizungen angeordnet sind.

6. Heizelementschweissvorrichtung zum bereichsweisen Aufwärmen von Kunststoffformteilen nach einem der Ansprüche 1 bis 5, **dadurch gekennzeichnet, dass** der Werkstoff des Zentralbereiches (7) eine mindestens 25 mal so hohe Wärmeleitfähigkeit aufweist wie der Werkstoff des Randbereiches (8,9).

7. Heizelementschweissvorrichtung zum bereichsweisen Aufwärmen von Kunststoffformteilen nach einem der Ansprüche 1 bis 6, **dadurch gekennzeichnet, dass** der Randbereich (8,9) aus Keramik oder aus hoch legiertem Stahl ausgebildet ist.

8. Heizelementschweissvorrichtung zum bereichsweisen Aufwärmen von Kunststoffformteilen nach einem der Ansprüche 1 bis 7, **dadurch gekennzeichnet, dass** der Randbereich (8,9) aus einem Werkstoff ausgebildet ist, der eine kleinere Wärmeleitfähigkeit und eine höhere mechanische Festigkeit als der Werkstoff des Zentralbereichs (7) aufweist.

9. Heizelementschweissvorrichtung zum bereichsweisen Aufwärmen von Kunststoffformteilen nach einem der Ansprüche 1 bis 8, **dadurch gekennzeichnet, dass** die Randbereiche (8,9) durch Klemmung, Verschweissung oder Verklebung mit dem Zentralbereich (7) verbindbar angeordnet sind.

10. Heizelementschweissvorrichtung zum bereichsweisen Aufwärmen von Kunststoffformteilen nach einem der Ansprüche 1 bis 9, **dadurch gekennzeichnet, dass** die Kunststoffformteilen als Kunststoffrohrformteile ausgebildet sind.

11. Verfahren zum bereichsweisen Aufwärmen von Kunststoffformteilen mit einer Heizelementschweissvorrichtung nach einem der Ansprüche 1 bis 10, **dadurch gekennzeichnet, dass**, zumindest während des Aufheizens auf die Schweisstemperatur, die Temperaturwerte der unterhalb und oberhalb des Kunststoffrohrformteiles liegenden Heizungen in Abhängigkeit der Zeit gemessen werden und von einem Rechner ausgewertet werden und dass die Daten von dem Rechner zur unterschiedlichen Regelung der Energiezufuhr zur obenliegenden und zur untenliegenden Heizung verarbeitet werden, derart, dass am Ende des Aufheizens die untenliegende Heizung die gleiche Schweisstemperatur wie die obenliegende Heizung erreicht.
